# EUROPÄISCHE PATENTSCHRIFT

(11) **EP 1 219 070 B1**
(45) Veröffentlichungstag und Bekanntmachung des Hinweises auf die Patenterteilung: **14.11.2007**
(21) Anmeldenummer: 00967762.6
(22) Anmeldetag: 23.09.2000
(51) Int. Cl.: H04L 12/40, B60R 16/02

(54) **DATENBUSSYSTEM FÜR KRAFTFAHRZEUGE MIT WECKANSCHLUSS**
DATA BUS SYSTEM FOR MOTOR VEHICLES WITH TIME INTERRUPT CONNECTION
SYSTEME DE BUS DE DONNEES POUR AUTOMOBILES AVEC CONNEXION DE REVEIL

(30) Priorität: 01.10.1999 DE 19947407
(43) Veröffentlichungstag der Anmeldung: 03.07.2002
(73) Patentinhaber: Bayerische Motoren Werke Aktiengesellschaft, 80809 München (DE)
(72) Erfinder: FRÖSCHL, Joachim, 82211 Herrsching (DE)
(86) Internationale Anmeldenummer: PCT/EP2000/009315
(87) Internationale Veröffentlichungsnummer: WO 2001/026294

(56) Entgegenhaltungen:
- DE-A- 4 226 704
- DE-C- 19 715 880

## Beschreibung

Die Erfindung bezieht sich auf ein Datenbussystem für Kraftfahrzeuge nach dem Oberbegriff des Patentanspruchs 1.

Bei Kraftfahrzeugen sind seit einigen Jahren Datenbussysteme mit einer Mehrzahl von Busteilnehmern, meist elektronische Steuergeräte, bekannt. Diese Busteilnehmer weisen zum Datenbusanschluss hinzu mindestens einen zusätzlichen Anschluss auf, der zur Übertragung eines Fahrzeug-Inbetriebnahmesignals, insbesondere des sog. "Klemme 15"-Signals, vorgesehen ist. Das "Klemme 15"-Signal liefert die Information, ob die Zündung ein- oder ausgeschaltet ist und somit ob die Brennkraftmaschine bzw. das Fahrzeug in Betrieb genommen ist oder nicht. Über das "Klemme 15"-Signal werden die Busteilnehmer bisher auch bei eingeschalteter Zündung mit Spannung versorgt. Da ein Busteilnehmer bei diesen bekannten Bussystemen lediglich bei eingeschalteter Zündung aktiv ist, stehen dessen Daten, wie beispielsweise Sensorwerte oder Fehlerspeichereinträge, für die jeweils anderen Busteilnehmer auch nur zu dieser Zeit zur Verfügung. In Zukunft muss jedoch zumindest eine teilweise Datenübertragung auch bei Stillstand der Brennkraftmaschine bzw. bei abgestelltem Fahrzeug möglich sein. Diese Anforderung wird insbesondere im Hinblick auf Steuergeräte, die bei Fahrzeugstillstand eine Vorbereitungsfunktion für die Inbetriebnahme vornehmen müssen, z. B. die korrekte Berechnung der Außentemperatur, oder im Hinblick auf zukünftige Diagnosefernabfragefunktionen gestellt.

Aus der DE 197 14 937 A1 ist ein Datenbussystem für Kraftfahrzeuge bekannt, bei dem bei ausgeschalteter Zündung, d. h. bei nicht in Betrieb genommenem Fahrzeug, ein selektives Wecken der Busteilnehmer für einen zeitweise notwendigen Datenaustausch zwischen ausgewählten Busteilnehmern möglich ist. Hierbei weisen die Busteilnehmer für die Ermöglichung eines Weckzustandes zusätzliche Auswerteschaltungen auf, die auch bei ausgeschalteter Zündung ständig mit einer Spannungsversorgungsquelle (z. B. Fahrzeugbatterie) verbunden sein müssen, um den Bus abzuhören. Ein derartiger erhöhter Ruhestromverbrauch wird auch bei einem ähnlichen Bussystem nach der DE 196 11 945 C1 benötigt. Der Weckzustand wird hierbei über Bussignale ausgelöst. Aus der DE 197 15 880 C1 ist ein Datenbussystem bekannt, bei dem zusätzlich zu einer Kommunikationsleitung eine separate Weckleitung vorgesehen ist. Zum technischen Hintergrund werden darüber hinaus die DE 42 26 704 A1, die DE 195 48 968 A1 und die DE 196 11 942 A1 genannt.

Es ist Aufgabe der Erfindung, ein Datenbussystem zu schaffen, das bei nicht in Betrieb genommenem Fahrzeug einerseits einen Weckzustand ermöglicht, andererseits jedoch keinen unnötigen Ruhestrom verbraucht. Diese Aufgabe wird durch die Merkmale des Patentanspruchs 1 gelöst. Eine vorteilhafte Weiterbildung der Erfindung ist der Gegenstand des abhängigen Patentanspruchs.

Bei dem erfindungsgemäßen Datenbussystem für Kraftfahrzeuge mit einer Mehrzahl von elektronischen Busteilnehmern weisen die Busteilnehmer jeweils zum Datenbusanschluss hinzu mindestens einen zusätzlichen Anschluss auf. Der zusätzliche Anschluss ist einerseits zur Übertragung eines Fahrzeug-Inbetriebnahmesignals, durch das beispielsweise wie üblich ein Einschaltvorgang der Busteilnehmer vorgenommen wird, vorgesehen und wird andererseits bei nicht in Betrieb genommenem Fahrzeug für die Übertragung eines Wecksignals zum Einschalten mindestens eines Busteilnehmers verwendet. Ein elektronischer Busteilnehmer kann ein kraftfahrzeug-internes Steuergerät und/oder ein kraftfahrzeug-externes, an das Datenbussystem anschließbares elektronisches Gerät, z. B. ein Diagnosegerät bzw. Tester, sein.

Das Fahrzeug-Inbetriebnahmesignal kann beispielsweise weiterhin das "Klemme 15"-Signal sein. Dabei kann der zusätzliche Anschluss über eine einfache Signalleitung direkt mit der "Klemme 15" oder mit einem Steuergerät verbunden sein, das das "Klemme 15"-Signal indirekt überträgt. Dieser ohnehin bei Steuergeräten als Busteilnehmer vorgesehene "Klemme 15"-Anschluss bleibt also funktionell erhalten und wird zusätzlich als Weckanschluss verwendet. Die einfache Signalleitung für das Inbetriebnahmesignal, wie z. B. für das "Klemme 15"-Signal, ist zusätzlich eine Weckleitung.

Es kann zwischen Busteilnehmern, die auch wecken können, und Busteilnehmern, die nur geweckt werden können, unterschieden werden. Zumindest die weckenden Busteilnehmer sind vorzugsweise fest mit einer Dauerstromversorgung, insbesondere der Fahrzeugbatterie ("Klemme 30") verbunden. Will ein Busteilnehmer bei ausgeschalteter Zündung bzw. bei nicht in Betrieb genommenem Fahrzeug wecken, simuliert er auf der Weckleitung ein Wecksignal, das z. B. dem Signal entspricht, das bei in Betrieb genommenem Fahrzeug am zusätzlichen Anschluss durch das Inbetriebnahmesignal anliegen würde. Hierdurch werden die übrigen Busteilnehmer geweckt bzw. eingeschaltet.

Nach erfolgtem notwendigen Datenaustausch wird von dem weckenden Busteilnehmer auf der Weckleitung das Wecksignal wieder ausgeschaltet. Damit liegt am zusätzlichen Anschluss das Signal an, das üblicherweise ohnehin die ausgeschaltete Zündung bzw. das nicht mehr in Betrieb genommenem Fahrzeug anzeigt.

Das Wecksignal kann jedoch auch ein beliebiges anderes, einen Weckmodus anforderndes Signal sein, beispielsweise ein serieller Code, ein kurzer Impuls oder ein pulsweitenmoduliertes Signal. Wird ein Busteilnehmer über ein derartiges Wecksignal eingeschaltet, kann er sofort nach dem Einschalten ein sich vom Fahrmodus unterscheidenden Weckmodus aktivieren. Wenn das Wecksignal ein kurzer Impuls bzw. ein Code in Form eines Einschaltimpulses bzw. einer Einschaltimpulsfolge ist, kann das Ausschalten des geweckten Busteilnehmers zeit- oder ereignisgesteuert (z. B. nach dem erfolgtem notwendigen Datenaustausch) sein.

Durch diese Erfindung können zumindest die Busteilnehmer, die nur geweckt werden, selbst aber nicht wecken, unverändert bleiben.

Vorzugsweise wird auch über den Datenbusanschluss das Fahrzeug-Inbetriebnahmesignal als Digitalsignal an die Busteilnehmer übertragen. Damit können die Busteilnehmer feststellen, ob eine tatsächliche oder nur eine simulierte Inbetriebnahme über den zusätzlichen Anschluss vorgenommen wurde.

Insbesondere schalten die Busteilnehmer einen ersten Arbeitsmodus in Form eines Fahrmodus ein, wenn über den zusätzlichen Anschluss und über den Datenbusanschluss das Signal bzw. die Information übertragen wird, dass das Fahrzeug in Betrieb genommen ist. Die Busteilnehmer schalten einen zweiten Arbeitsmodus in Form eines Weckmodus ein, wenn am zusätzlichen Anschluss das Signal bzw. die Information anliegt, dass das Fahrzeug in Betrieb genommen ist und über den Datenbusanschluss die Information übertragen wird, dass das Fahrzeug nicht in Betrieb genommen ist.

Im Weckmodus können die Busteilnehmer einen eingeschränkten Betrieb aufnehmen, bei dem beispielsweise auf die Ansteuerung von Sensoren und/oder Aktuatoren verzichtet werden kann. Beispielsweise werden im Weckmodus nur die Teile des Steuergerätes aktiviert, die zum Auslesen vom Fehlerspeicher oder von Adaptionswerten erforderlich sind.

Die beibehaltene Übertragung des tatsächlichen Inbetriebnahmesignals über den zusätzlichen Anschluss, die grundsätzlich für die Realisierung der erfindungsgemäßen Weckfunktion nicht erforderlich wäre, ermöglicht unabhängig von der Weckfunktion bei einem Datenbusausfall zumindest noch ein Einschalten der Busteilnehmer für einen Notbetrieb. Bei Aktivierung der Busteilnehmer durch das tatsächliche Inbetriebnahmesignal am zusätzlichen Anschluss erkennen die Busteilnehmer über ihre interne Diagnose einen Busausfall. Im daraufhin ausgelösten Notbetrieb kann das Fahrzeug zumindest noch in die Werkstatt gefahren werden. Somit wird durch die Erfindung nicht nur der Ruhestromverbrauch reduziert, sondern auch die Verfügbarkeit des Fahrzeuges erhöht.

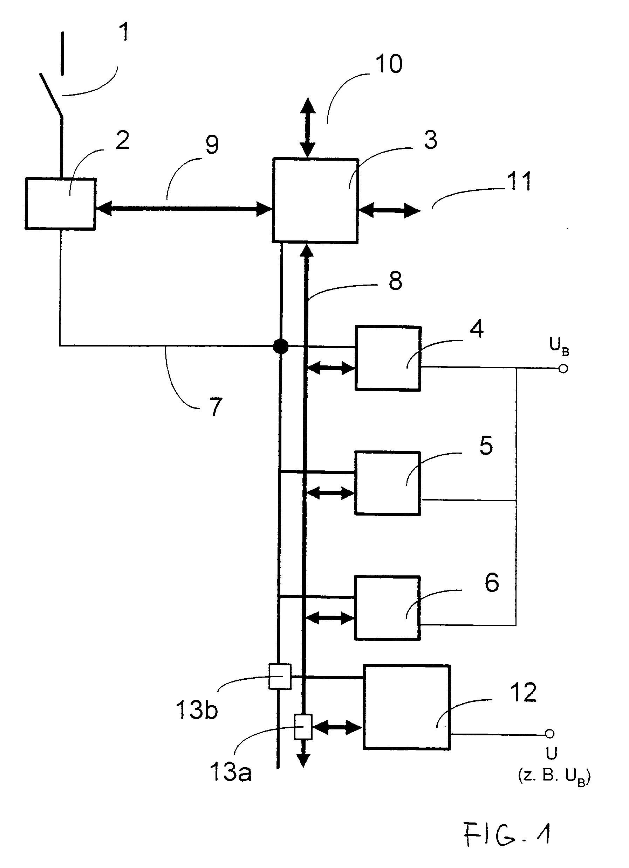

In der Zeichnung ist ein Ausführungsbeispiel der Erfindung dargestellt. Sie zeigt schematisch einen wesentlichen Ausschnitt eines erfindungsgemäßen Datenbusses.

Ein Zündschalter 1 ist mit einem zentralen Inbetriebnahmesteuergerät 2 (z. B. mit einem sog. CAS (Car Access System)) verbunden. Das Inbetriebnahmesteuergerät 2 ist über einen Datenbus 9 an ein intelligentes Gateway 3 angeschlossen. Das Gateway 3 verbindet verschiedene Bussysteme 8, 9, 10 und 11 miteinander. Mit dem Bussystem 8 sind weitere Busteilnehmer 4, 5 und 6 über Datenbusanschlüsse verbunden. Das Bussystem 8 kann beispielsweise der Datenbus für Antriebssteuergeräte sein. Dabei können die Busteilnehmer 4, 5 und 6 beispielsweise ein Motorsteuergerät 4, ein Getriebesteuergerät 5 und ein Bremssteuergerät 6 sein. Die Busteilnehmer 3, 4, 5 und 6 weisen jeweils einen zusätzlichen Anschluss für eine einfache Signalleitung 7 auf, über die sie an das Inbetriebnahmesteuergerät 2 angeschlossen sind. Alternativ könnten (hier nicht dargestellt) die zusätzlichen Anschlüsse der Busteilnehmer 3, 4, 5 und 6 auch direkt mit dem Zündschalter 1 verbunden sein. Ein weiterer Busteilnehmer 12, z. B ein fahrzeug-externer Diagnosetester, kann zusätzlich über Steckverbindungen 13a und 13b an den Datenbus 8 und an die Signalleitung 7 angeschlossen werden. Entweder alle Busteilnehmer oder nur ausgewählte Busteilnehmer, insbesondere die weckenden Busteilnehmer (z. B. die Steuergeräte 4, 5 und 6 sowie ggf. 12), können beispielsweise über einen Fahrzeugbatterieanschluss mit Dauerspannung U_{B} versorgt werden.

Der Zündschalter 1, der beispielsweise über einen Schlüssel oder einen Transponder betätigt wird, löst ein Fahrzeug-Inbetriebnahmesignal aus, das an das Inbetriebnahmesteuergerät 2 weitergeleitet wird. Bei geschlossenem Zündschalter 1 zeigt das Inbetriebnahmesignal an, dass das Fahrzeug in Betrieb genommen ist. Bei offenem Zündschalter 1 zeigt das Inbetriebnahmesignal einen Fahrzeugstillstand an. Bei geschlossenem Zündschalter 1 wird vom Inbetriebnahmesteuergerät 2 das Inbetriebnahmesignal beispielsweise als High-Pegel an die Signalleitung 7 und als entsprechende Digitalinformation an den Datenbus 9 ausgegeben. Der High-Pegel weist vorzugsweise eine Amplitude (z. B. U_{B}=12 V) auf, die in etwa der des "Klemme 15"-Signals bei eingeschalteter Zündung entspricht; denn somit können die ohnehin vorhandenen steuergeräteinternen Beschaltungen des zusätzlichen Anschlusses der Busteilnehmer unverändert für die erfindungsgemäße Weckfunktion benutzt werden (notwendiger Einschaltminimalpegel derzeit etwa 6 V). Bei offenem Zündschalter 1 wird vom Inbetriebnahmesteuergerät 2 das Inbetriebnahmesignal beispielsweise als Low-Pegel an die Signalleitung 7 und ebenfalls als entsprechende Digitalinformation an den Bus 9 ausgegeben. Die Inbetriebnahme des Fahrzeuges durch das Schließen des Zündschalters 1 löst dadurch ein Einschalten der Busteilnehmer 3 bis 6 über die Signalleitung 7 aus. Daraufhin wird vom Gateway 3 das über den Datenbus 9 empfangene Inbetriebnahmesignal an den Datenbus 8 weitergegeben. Die Busteilnehmer 4, 5 und 6 erkennen damit, dass Fahrbetrieb vorliegt und aktivieren dementsprechend, wie bisher ohnehin üblich, den Fahrmodus als Arbeitsmodus. Dabei werden sämtliche Sensoren und Aktuatoren betriebsbereit geschaltet.

Wird der Zündschalter 1 geöffnet und damit das Fahrzeug abgestellt, werden zunächst auch sämtliche Busteilnehmer über den zusätzlichen Anschluss abgeschaltet. Während des Fahrzeugstillstandes können ausgewählte Busteilnehmer, z. B. das Motorsteuergerät 4 oder der Diagnosetester 12, einen Weckzustand der jeweils anderen Busteilnehmer über die Ausgabe eines entsprechenden simulierten Inbetriebnahmesignals, also eines High-Pegels, auf der Signalleitung 7 auslösen. Die Signalleitung 7 wird somit im Fahrzeugstillstand zur Weckleitung. Über den High-Pegel am zusätzlichen Anschluss können die zu weckenden Busteilnehmer nicht unterscheiden, ob der Weckmodus oder der Fahrmodus als Arbeitsmodus zu wählen ist. Aber auf die Aktivierung der Busteilnehmer hin können diese die Informationen auf dem Datenbus 8 abfragen. Wird dabei festgestellt, dass das tatsächliche Inbetriebnahmesignal einen ge-öffneten Zündschalter 1 bzw. einen Fahrzeugstillstand anzeigt, wird daraufhin der Weckmodus gewählt. Hierbei kann von den geweckten Busteilnehmern beispielsweise die Ausgabe relevanter vorgegebener Speicherinhalte, wie z. B. der Fehlerspeicherinhalt oder Adaptionswerte, vorgenommen werden.

Ergänzend wird darauf hingewiesen, dass eine Abfrage des Datenbusses 8 nicht erforderlich ist, wenn das Wecksignal über die Signalleitung 7 ein speziell codiertes, den Weckmodus direkt anforderndes Signal, wie z. B. ein kurzer Impuls, ist.

Im dargestellten Ausführungsbeispiel werden auf ein Wecken durch einen Busteilnehmer hin alle übrigen Busteilnehmer geweckt, die an der Weckleitung bzw. an der Signalleitung 7 angeschlossen sind. Ein selektives Wecken ist nicht möglich. Allerdings kann über die Weckfeitung 7 vom weckenden Busteilnehmer 4 ein quasi-digitales Signal nachgeschickt werden, durch das nur ausgewählte Daten angefragt werden können. Somit können die geweckten Busteilnehmer 3, 5 und 6 ggf. selektiv den Weckmodus unterdrücken, um den Ruhestromverbrauch weiter zu senken.

## Patentansprüche

1. Datenbussystem für Kraftfahrzeuge mit einer Mehrzahl von elektronischen Busteilnehmern (3-6,12), die jeweils zum Datenbusanschluß (8) hinzu mindestens einen zusätzlichen Anschluß (7) aufweisen, **dadurch gekennzeichnet, daß** der zusätzliche Anschluss (7) einerseits zur Übertragung eines Fahrzeug-Inbetriebnahmesignals vorgesehen ist und andererseits bei nicht in Betrieb genommenem Fahrzeug für die Übertragung eines Wecksignals zum Einschalten der Busteilnehmer (3, 4, 5, 6) verwendet wird, wobei auch über den zusätzlichen Anschluss (7) das Fahrzeug-Inbetriebnahmesignal als Digitalsignal an die Busteilnehmer (3-6) übertragen wird, damit die Busteilnehmer feststellen können, ob eine tatsächliche oder nur eine simulierte Inbetriebnahme über den zusätzlichen Anschluss vorgenommen wurde.

2. Datenbussystem nach Patentanspruch 1, **dadurch gekennzeichnet, daß** die Busteilnehmer (3, 4, 5, 6) einen ersten Arbeitsmodus in Form eines Fahrmodus einschalten, wenn über den zusätzlichen Anschluß (7) und über den Datenbusanschluß das Signal übertragen wird, daß das Fahrzeug in Betrieb genommen ist, und daß die Busteilnehmer einen zweiten Arbeitsmodus in Form eines Weckmodus einschalten, wenn über den zusätzlichen Anschluß (7) das Signal übertragen wird, daß das Fahrzeug in Betrieb genommen ist und über den Datenbusanschluß das Signal übertragen wird, daß das Fahrzeug nicht in Betrieb genommen ist.

## Claims

1. A data bus system for motor vehicles with a plurality of electronic stations (3-6, 12), which, in each case, have at least one additional connection (7) for data bus connection (8) thereto, **characterised in that** the additional connection (7) is provided, on the one hand, for the transmission of a vehicle startup signal, and, on the other hand, is used for the transmission of a time interrupt signal for switching on the stations (3, 4, 5, 6) in a vehicle that has not been started up, the vehicle startup signal also being transmitted as a digital signal to the stations (3-6) via the additional connection (7), so the stations can establish whether an actual or only or only a simulated startup was carried out via the additional connection.

2. A data bus system according to claim 1, **characterised in that** the stations (3, 4, 5, 6) switch on a first operating mode in the form of a driving mode, if the signal is transmitted via the additional connection (7) and via the data bus connection, that the vehicle has been started up, and **in that** the stations switch on a second operating mode in the form of a time interrupt mode, when the signal is transmitted via the additional connection (7) that the vehicle has been started up and the signal is transmitted via the data bus connection that the vehicle has not been started up.

## Revendications

1. Système de bus de données de véhicules automobiles comportant plusieurs participants électroniques (3 - 6, 12) au bus, ayant chacun au moins un branchement supplémentaire (7) en plus du branchement de bus (8),
**caractérisé en ce que**
le branchement supplémentaire (7) sert d'une part à transmettre un signal de mise en marche du véhicule et d'autre part lorsque le véhicule n'est pas mis en marche, à la transmission d'un signal de réveil pour mettre en marche le participant au bus (3, 4, 5, 6), et par le branchement supplémentaire (7), on transmet le signal de mise en marche du véhicule comme signal numérique vers les participants (3 - 6) pour que les participants puissent déterminer si une mise en marche réelle ou seulement simulée a été faite par le branchement supplémentaire.

2. Système de bus selon la revendication 1,
**caractérisé en ce que**
les participants au bus (3, 4, 5, 6) mettent en oeuvre un premier mode de travail sous la forme d'un mode de roulage si par le branchement supplémentaire (7) et par le branchement sur le bus de données est transmis un signal indiquant que le véhicule est mis en marche et que les participants au bus branchent un second mode de travail sous la forme d'un mode de réveil si par le branchement supplémentaire (7) est transmis le signal indiquant que le véhicule est mis en marche et par le branchement de bus de données, est transmis le signal indiquant que le véhicule n'a pas été mis en marche.
